# EUROPEAN PATENT SPECIFICATION

(11) **EP 3 879 926 B1**
(45) Date of publication and mention of the grant of the patent: **18.10.2023**
(21) Application number: 21162131.3
(22) Date of filing: 11.03.2021
(51) Int. Cl.: H05B 3/42, F24D 17/00, F24H 1/10, G05D 23/13, H05B 3/78

(54) **HEATING CARTRIDGE FOR A DISPENSING ASSEMBLY AND DISPENSING ASSEMBLY COMPRISING SAID HEATING CARTRIDGE**
HEIZPATRONE FÜR EINE AUSGABEVORRICHTUNG UND AUSGABEVORRICHTUNG MIT BESAGTER HEIZPATRONE
CARTOUCHE DE CHAUFFAGE POUR UN ENSEMBLE DE DISTRIBUTION ET ENSEMBLE DE DISTRIBUTION COMPRENANT LADITE CARTOUCHE DE CHAUFFAGE

(30) Priority: 13.03.2020 IT 202000005437
(43) Date of publication of application: 15.09.2021
(73) Proprietor: Unival S.r.l., 25065 Lumezzane (Brescia) (IT)
(72) Inventor: SALA, Ezio, 25065 Lumezzane (BS) (IT)
(74) Representative: Biesse S.r.l.

(56) References cited:
- DE-C- 391 323
- US-A- 2 894 109
- US-A1- 2018 215 602
- US-B1- 7 570 877
- US-B2- 9 234 674

## Description

### Field of the Invention

In its most general aspect, the present invention refers to the technical sector of sanitary fixtures and in particular the invention refers to a heating cartridge for a dispensing assembly, such as a tap, and to a dispensing assembly comprising the aforesaid heating cartridge.

### State of the art

As is known for the production of hot water for sanitary use, in addition to the use of electric water heaters, boilers, solar panels and similar so-called external heating devices, as they are placed at a distance from the point where the hot water produced is dispensed and provided to the user, for example through a tap of a sanitary apparatus of a bathroom or a kitchen, the known art also provides so-called electric taps.

Electric taps are dispensing devices which, in addition to regulating the water flow, i.e. regulating the water flow rate in a pipe, heat the inlet water by raising its temperature through a built-in electric resistance.

The electric taps allow energy and time savings with respect to the taps which use external heating devices of the type considered above, as they substantially eliminate wait times for a first gush of hot water to be dispensed from the tap, which are due to the path that the water must travel from the external heating device to the tap and the heating of the same path.

Document US2018/215602A1 discloses a heating cartridge according to the preamble of claim 1.

On the international market, electric taps are available with powers from 2000 to 3000W with so-called armoured electric resistance.

An armoured electric resistance is substantially an electric resistance which comprises an outer case defined as "armour", which provides resistance to corrosion and to the repeated thermal cycles to which it is subjected in the use of an electric tap of the aforesaid type.

An electric tap with armoured resistance comprises a heating chamber in which the electric resistance is housed and which is placed downstream of flow regulating means, which are in turn operated by an appropriate control; for example, an opening and closing lever or handle.

This way the armoured resistance, which is operated by a suitable device connected to the aforesaid opening and closing lever or handle, is always immersed in the water and in particular, during its operation, transfers the heat produced to the fluid vein that laps it during the path toward the tap dispensing mouth.

With regard to the aforesaid flow regulating means, in accordance with the known art, in electric taps with armoured resistance, they are of the so-called "head valve" type (classic taps), whereas electric taps with armoured resistance equipped with mixing cartridge (electric mixer taps) are not known.

Briefly, a head valve is a large screw which, by screwing or unscrewing, regulates the passage opening of the tap whereas, as is known, a mixing cartridge is a device which mixes in a single flow, by dosing the flow rates, a hot water flow with a cold water flow, through the position of the control lever or handle.

Although suitable for the purpose, the electric taps with armoured resistance provided in the known art are not free from drawbacks, including a tendency to accumulate limescale and, therefore, to lose efficiency.

A further drawback lies in the difficult maintenance and substantially in the inability of repairing the armoured resistance which, in case of breakage, requires the replacement of the entire tap.

A further drawback is due to the need, during the first use, to fill the heating chamber with water before activating the armoured resistance, because of the air present inside it, which can create pockets that prevent a proper heat exchange. A dry actuation of the armoured resistance can also cause damage to it.

A further drawback lies in the limited performance of the aforesaid electric taps during cold seasons, for example in the winter, or where the water is fed at low temperatures. In these cases, the water flow passing through the heating chamber may not reach the desired temperature.

A further drawback lies in the difficult control of the temperature of the water dispensed by the electric tap, due to the fact that the temperature of the water being dispensed is inversely proportional to the flow rate and, therefore, with the tap fully open, the water will be less hot than that dispensed with the tap almost closed, as the power of the electric resistance remains constant for a given tap and consequently so does the heat released, whereas as the flow rate varies, the quantity of water passing through the heating chamber, therefore on the electric resistance, is variable. Unfortunately, in these electric taps it is not even possible to have the maximum water flow rate or, anyway, a high water flow rate at room temperature, as the aforesaid device that actuates the armoured resistance is automatically activated by the opening and closing lever or knob when a low threshold value of the flow rate dispensed is exceeded.

A further drawback lies in the direct contact of the water to be heated with heating parts, which can create problems in relation to the drinkability of water.

A further drawback lies in the limited design freedom, as electric taps with armoured resistance impose very restrictive constraints on their design in order to function properly, for example, minimum values of the diameter and length of the heating chamber, which are known to exceed 50 mm and respectively 145 mm and which can also reach about 55 mm and respectively 150 mm.

### Summary of the invention

The technical problem underlying the present invention has been that of providing a heating cartridge for a dispensing assembly, such as, for example, a tap, having structural and functional characteristics such as to overcome one or more of the drawbacks mentioned above with reference to the known art.

In accordance with the invention, the aforesaid problem is solved by a heating cartridge for a dispensing assembly, the heating cartridge comprising:
a heating chamber,
a first conduit having a first opening for a water inflow and at least one second opening for a water outflow, wherein the aforesaid first conduit is in fluid communication with the aforesaid heating chamber;
a second conduit extended internally to the aforesaid heating chamber and having a first opening for a water inflow and a second opening for a water outflow, wherein the aforesaid second conduit is in fluid communication with the aforesaid heating chamber through the aforesaid first opening; and
a heating element extending inside the aforesaid heating chamber and equipped with connecting elements for the connection to a power source such as, for example, a household electric network, a battery, photovoltaic panels and similar electrical power sources.

In practice, in accordance with the invention, in the present heating cartridge there is a choking of the water inflow, which is divided when exiting the aforesaid first conduit into a first portion intended to be conveyed to a mixing cartridge or into a water pipe at room temperature of a dispensing assembly, in case of taps without mixing cartridge, and into a second portion which is first conveyed to the aforesaid heating chamber in which it is heated and from which, through the aforesaid second conduit, is then conveyed to the aforesaid mixing cartridge or into a hot water pipe of a dispensing assembly, in case of taps without mixing cartridge. By acting on the mixing cartridge, for example through a single-control lever, or by operating different control levers in case of a tap without mixing cartridge, the water flow is thus obtained at the desired temperature.

Preferably, the aforesaid first conduit extends inside the aforesaid heating chamber, however, the possibility of providing a first conduit substantially outside the heating chamber not being excluded, the important thing is that a first portion of the water flow entering the aforesaid first conduit is adapted to be conveyed to the mixing cartridge or into a water pipe at room temperature of a dispensing assembly, in case of a tap without mixing cartridge, preferably in a direct manner, whereas a second portion is adapted to be conveyed to the inside of the heating chamber before being conveyed to the mixing cartridge or into a hot water pipe of a dispensing assembly, in case of a tap without mixing cartridge.

Preferably, the aforesaid fluid communication between the aforesaid first conduit and the aforesaid heating chamber takes place near the aforesaid at least one second opening of the aforesaid first conduit and, more preferably, takes place through the aforesaid at least one second opening of the aforesaid first conduit.

In particular, preferably, for the aforesaid fluid communication between the aforesaid first conduit and the aforesaid heating chamber, the aforesaid first conduit at the aforesaid second opening has a pointed end portion, more preferably a pointed end portion with an oblique profile or semi-circular section, at which the water flow is choked by exiting substantially along two directions, however, the possibility of providing a third opening, arranged on the first conduit between the first opening and the second opening of the same first conduit, for the choking of the water outflow exiting the first conduit is not excluded.

Preferably, the aforesaid heating chamber, at the aforesaid pointed end portion of the aforesaid first conduit, is equipped with a housing having a width substantially corresponding to the diameter of said first conduit.

Preferably, the aforesaid heating element is removably housed in the aforesaid heating chamber.

Preferably, the aforesaid heating element is extractable from the aforesaid heating chamber from the outside thereof and, particularly, the aforesaid heating element can be slipped out of the heating chamber, as it can be accessed from the outside thereof.

Preferably, the aforesaid heating element comprises an outer case made of ceramic silicone, more preferably a blade-shaped case which allows to optimise the distribution of heat in the fluid vein passing through the heating chamber and which allows very efficient and uniform heat exchange between the heating element and water.

Preferably, the aforesaid heating element extends substantially parallel to the aforesaid second conduit.

Preferably, the aforesaid heating cartridge comprises a filter arranged at the aforesaid first opening of the aforesaid second conduit.

Preferably, the aforesaid second conduit extends substantially along the entire length of the aforesaid heating chamber.

Preferably, the aforesaid heating cartridge comprises a connection pipe for connecting to a water supply network, wherein, more preferably, the aforesaid connection pipe is outside the aforesaid heating chamber.

Preferably, the aforesaid heating cartridge comprises a potentiometer acting on the aforesaid heating element.

Preferably, the aforesaid heating cartridge comprises a temperature measuring device housed inside the aforesaid heating chamber.

Preferably, the aforesaid heating cartridge comprises a display showing the temperature measured by the aforesaid temperature measuring device, which is arranged outside the aforesaid heating chamber.

Preferably, the aforesaid heating cartridge has a power between about 3000W and about 3500W, and a flow rate equal to about 6-7 litres per minute, with dimensions of the aforesaid heating chamber lower than 17.5 mm as regards the radius (∅35mm), and lower than 128 mm as regards the height.

In accordance with the invention, the aforesaid problem is further solved by a dispensing assembly, such as a tap, comprising a main body and the aforesaid heating cartridge housed inside the aforesaid main body.

Preferably, the aforesaid dispensing assembly comprises a mixing cartridge in fluid communication with the aforesaid first conduit and with the aforesaid second conduit of the aforesaid heating cartridge, through the respective second openings.

### Brief description of the figures

Further characteristics and advantages of the invention will be more evident from the review of the following detailed description of a preferred, but not exclusive, embodiment shown for illustration purposes only and without limitation, with the aid of the attached drawings, in which:
- figure 1 is a perspective view of a heating cartridge for a dispensing assembly in accordance with the present invention;
- figure 2 is a longitudinal sectional view along a median plane of the heating cartridge of figure 1;

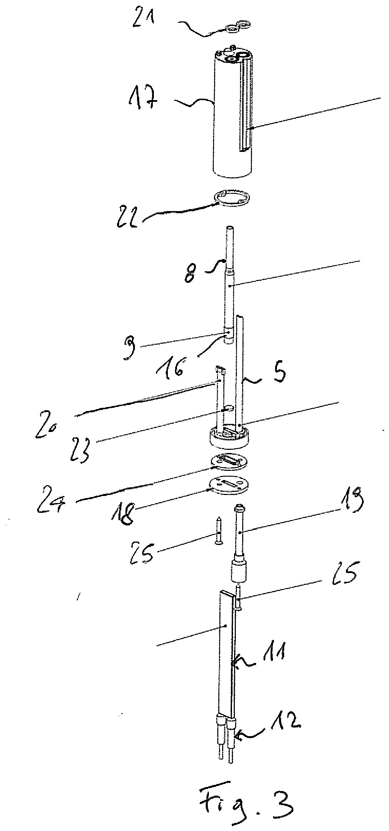

- figure 3 is an exploded perspective view of the heating cartridge of figure 1;
- figure 4 is an exploded view of a single-lever dispensing assembly shown without a control lever, comprising the heating cartridge of figure 1, in accordance with the present invention.

### Detailed description of the invention

With reference to the aforesaid figures, a heating cartridge according to the present invention is generally referred to as **1.**

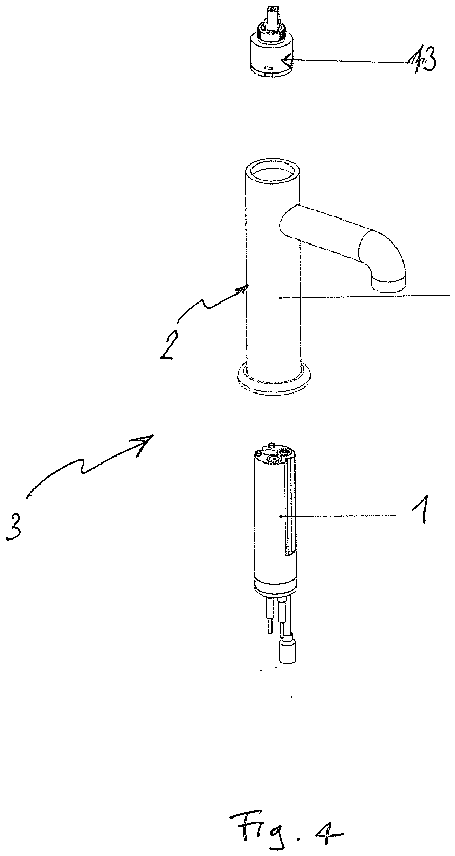

The heating cartridge **1** is an electric cartridge intended to be combined with the main body **2** of a dispensing assembly, for example a tap, to form a so-called dispensing assembly or electric tap, in the example of figure 4 generally referred to as **3** and depicted as a single-lever mixing tap shown for simplicity without a control lever, however, the possibility of providing a tap of a different type is not excluded, as will become better apparent hereinafter.

The heating cartridge **1** essentially comprises a heating chamber **4,** a first conduit **5** having a first opening **6** for a water inflow and at least one second opening **7** for a water outflow, a second conduit **8** extending inside the heating chamber **4** and having a first opening **9** for a water inflow and a second opening **10** for a water outflow, and a heating element **11** arranged inside the heating chamber **4** and equipped with connecting elements **12** for the connection to an electrical power source such as, for example, a household electric network, a battery, photovoltaic panels and similar electrical power sources, wherein the first conduit **5** and the second conduit **8** are in fluid communication with the heating chamber **4.**

In detail, the first conduit **5,** which in the examples of the aforesaid figures is shown inside the heating chamber **4,** however, the possibility of providing a first conduit outside the heating chamber not being excluded, is in fluid communication with the heating chamber **4** near the second opening **7,** whereas the second conduit **8** is in fluid communication with the heating chamber **4** through the aforesaid respective first opening **9.**

In practice, in accordance with the invention, in the present heating cartridge, during its use, there is a choking of the water inflow, corresponding to the water inflow in the first conduit **5,** which is divided when exiting the first conduit **5** into a first portion intended to be conveyed to a mixing cartridge **13,** as shown in the examples of the figures, or anyway to a water pipe at room temperature of a dispensing assembly in case of taps without a mixing cartridge, and into a second portion which is first conveyed to the aforesaid heating chamber **4** in which it is heated and from which, through the aforesaid second conduit **8,** is adapted to be conveyed to the mixing cartridge **13,** as shown in the examples of the figures, or to a hot water pipe of a dispensing assembly in case of taps without a mixing cartridge.

The water flow fed into the heating cartridge and the water flows obtained therefrom following the choking, as well as the heated water flow, which as mentioned above are visible in the examples of the aforesaid figures, are in particular denoted by respective arrows.

By acting on the mixing cartridge **13** through a single control, or by acting on two controls in case of taps without mixing cartridge, the water flow is thus obtained at the desired temperature, just as it is also possible to obtain two flows at different temperatures.

In this regard, it should be added that there is an ON/OFF device which starts working automatically at the beginning of the supply. The ON-OFF device is basically a switch which closes and starts the heating cycle of the heating element.

As shown in the examples of the aforesaid figures, the aforesaid first portion of the water outflow exiting the first conduit **5** is conveyed to the mixing cartridge **13,** or anyway to a water pipe at room temperature, preferably in a direct manner through the respective second opening **7** whereas, as mentioned above, the second portion is conveyed to the inside of the heating chamber **4,** again preferably through the same second opening **7** of the first conduit **5,** however, the possibility of providing a third opening in the first conduit for conveying the aforesaid second portion of the water flow to the heating chamber is not excluded, this implementation variant being not shown in the figures.

For the purpose, that is to say, in order to implement the aforesaid fluid communication between the first conduit **5** and the heating chamber **4,** the first conduit **5** has a pointed end portion **14** at the second opening **7.**

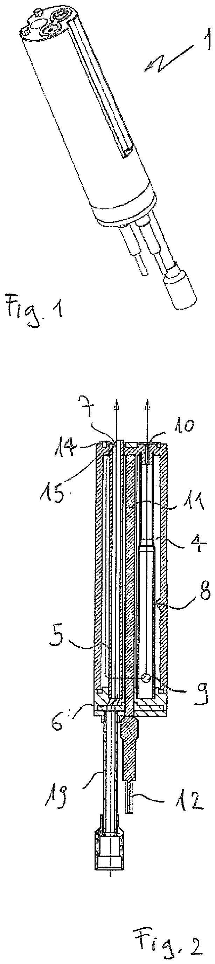

In detail, in accordance with the invention, the pointed end portion **14** of the first conduit **5** has an oblique profile or a semi-circular section, so that the water outflow is choked since exiting substantially along two directions, a first direction toward the mixing cartridge **13** or anyway in a water pipe at room temperature, substantially in line with the first conduit **5,** and a second direction toward the inside of the heating chamber **4,** deviated with respect to the aforesaid first direction, as shown in the example of figure 2.

Furthermore, preferably, the heating chamber **4,** at the pointed end portion **14** of the first conduit **5,** is equipped with a housing **15** having a width substantially corresponding to the diameter of the first conduit **5.**

As regards the fluid communication between the heating chamber **4** and the second conduit **8,** which as mentioned above is implemented through the first opening **9** of the second conduit **8,** it should be added that preferably the present heating cartridge comprises a filter **16,** preferably a mesh filter, arranged at the first opening **9.**

Moreover, as shown in the examples of the aforesaid figures, it should be added that, preferably, the second conduit **8** extends substantially along the entire length of the heating chamber **4,** in accordance with the examples of the figures, the first and second conduits being substantially parallel to each other.

In practice, according to the embodiment depicted in the examples of the figures, the heating cartridge **1** comprises a cap **17** closed by a base plate **18,** wherein the base plate **18** is equipped with an opening at the first opening **6** of the first conduit **5** and wherein the cap **17** comprises two openings at the second opening **7** of the first conduit **5** and at the second opening **10** of the second conduit **8.**

Moreover, in accordance with the examples of the aforesaid figures, the first opening **9** of the second conduit **8** is advantageously arranged proximal to the aforesaid base plate **18.**

In accordance with the examples of the aforesaid figures, the heating cartridge **1** preferably also comprises a connection pipe **19** for the connection to a water supply network, which is preferably arranged outside the heating chamber **4** and which is connected to the first opening **6** of the first conduit **5.**

As regards the heating element **11,** it should be said that it is preferably removably housed in the heating chamber **4.**

In detail, preferably, the heating element **11** is extractable from the heating chamber **4** from the outside thereof and, particularly, can be slipped out of the heating chamber **4,** as it can be accessed from the outside thereof.

For the purpose, the heating chamber **4** is equipped with an access arranged on the base plate **18,** basically a passage obtained on the base plate **18** through which the heating element **11,** which is preferably a kind of blade made of ceramic silicone or similar materials, can be slipped in and out.

In detail, the heating element **11** comprises an outer case made of ceramic silicone, inside which a resistive coil is arranged, which consists, for example, of a wire made of nickel alloy that is wound around a core made of insulating material, for example high purity, compact and annealed magnesium oxide.

Ceramic silicone is a particular silicone formulation that has the property of heating up when electric current flows through it, exactly like a filament inside an incandescent light bulb, without short-circuiting when in contact with water. Additionally, this particular silicone formulation has anti-fouling properties, which do not allow the limescale to adhere to its surface.

In accordance with the above, the outer case of the heating element **11,** which extends substantially parallel to the first conduit **8** substantially along the entire length of the heating chamber **4,** is coupled to the connecting elements **12** for the connection to an electrical power source.

In this regard, according to the present invention, the heating cartridge may comprise, for example, a power cable equipped with a plug to be powered through a mains power socket, or it may comprise a power cable intended to be connected directly to an electric network, for example, through junction boxes or other devices provided for by the current regulations concerning electrical connections.

In accordance with the invention, the present cartridge may also comprise a potentiometer acting on the heating element **11,** which is not depicted in the examples of the figures.

The potentiometer, or another device for adjusting the electric power, adapts the heating of the heating element, which is basically an electric resistance, by varying the supply voltage so as to control the temperature of the water by setting a maximum attainable temperature. In other words the potentiometer, which is connected to the dispensing control, i.e. the opening and closing lever or handle, drives the heating element having the regulation function which is usually performed on board the boiler, by acting on the relative thermostat, in case of external heating devices placed at a distance from the dispensing assembly.

In accordance with the examples of the figures, the heating cartridge **1** also comprises a temperature measuring device arranged inside the heating chamber **4,** in an appropriate housing **20.**

In accordance with the invention, the present heating cartridge may also comprise a display showing the temperature measured by the aforesaid temperature measuring device, wherein the display is arranged outside the heating chamber **4** and the main body **2** of the electric tap **3,** particularly arranged at the connecting elements **12.**

It should also be added that in accordance with the invention, the present heating cartridge has a power between about 3000W and about 3500W, and a flow rate equal to about 6-7 litres per minute, and an operating pressure between 2 bars e 5 bars.

The heating cartridge according to the present invention can also comprise a plurality of gaskets and assembly means, for example an outlet gasket **21** of cold/hot water, an upper gasket **22,** a pipe gasket **23,** an intermediate gasket **24** and, respectively, clamping screws **25** acting on the base plate **18.**

The advantages of the present invention, which have become evident in the course of the above description, can be summarised by pointing out that a heating cartridge is provided, which can be used both in so-called "head valve" taps and in so-called ventilated or non-ventilated "mixing" taps, which allows a total control of the water supply temperature, like a mixer tap in which hot water comes from a heating device outside the tap, which also allows to save energy and time and considerably reduces water consumption, as it makes hot water available almost instantaneously from the dispensing mouth, by making the electric resistance work for basically the same amount of time as when dispensing, if hot water supply is selected.

In accordance with the invention, in fact, the capacity of the heating chamber, which is more limited than the solutions provided in the known art, allows immediate heating of the fluid vein passing through the heating chamber and immediate supply of hot water (5-8 seconds) with homogeneous maintenance of the temperature.

Advantageously, moreover, the dimensions of the heating chamber and its shape prevent the formation of air pockets inside the heating chamber, which could compromise an effective heat exchange between the heating element and the fluid vein passing through the heating chamber.

A further advantage is provided by the use of ceramic silicone for the heating element, which lends anti-limescale characteristics to the heating cartridge.

Advantageously, moreover, the ceramic silicone is compatible with a drinking use of the water dispensed by the dispensing assembly according to the present invention.

A further advantage lies in the possibility of replacing the heating element in a particularly easy way by disassembling the tap, disconnecting the electrical connecting elements and slipping out the heating element.

Furthermore, according to the present invention, the heating cartridge does not influence the design of the dispensing assembly in which it is used, resulting in considerable marketing advantages and possible integration in an already existing line.

In the embodiments depicted and described, in order to satisfy contingent and specific requirements, a person skilled in the art may make numerous variations and modifications to the present invention, all of which are within the scope of protection of the invention as defined by the following claims.

## Claims

1. Heating cartridge (1) for a dispensing assembly, the heating cartridge comprising:
a heating chamber (4), and
a heating element (11) extended internally to said heating chamber (4) and equipped with connecting elements (12) for the connection to an electrical power source;
**characterized in that** the heating cartridge comprises:
a first conduit (5) having a first opening (6) for a water inflow and at least one second opening (7) for a water outflow, wherein said first conduit (5) is in fluid communication with said heating chamber (4); and
a second conduit (8) extended internally to said heating chamber (4) and having a first opening (9) for a water inflow and a second opening (10) for a water outflow, wherein said second conduit (8) is in fluid communication with said heating chamber (4) through said first opening (9).

2. Cartridge according to claim 1, wherein said first conduit (5) is extended internally to said heating chamber (4).

3. Cartridge according to claim 1 or 2, wherein said fluid communication between said first conduit (5) and said heating chamber (4) takes place near said second opening (7) of said first conduit (5).

4. Cartridge according to claim 1, 2 or 3, wherein said heating element (11) is removably housed in said heating chamber (4), preferably wherein said heating element (11) is extractable from said heating chamber (4) from the outside thereof.

5. Cartridge according to any one of the preceding claims, wherein said heating element (11) comprises a ceramic silicone outer case.

6. Cartridge according to any one of the preceding claims, wherein said first conduit (5), at said second opening (7), has an end portion (14) which is pointed, preferably an end portion (14) with oblique profile or semi-circular section.

7. Cartridge according to claim 6, wherein said heating chamber (4), at said end portion (14) of said first conduit (5), is equipped with a housing (15) having a width substantially corresponding to the diameter of said first conduit (5).

8. Cartridge according to any one of the preceding claims, comprising a potentiometer acting on said heating element (11).

9. Cartridge according to any one of the preceding claims, comprising a temperature measuring device housed inside said heating chamber (4), and a display showing the temperature measured by said temperature measuring device arranged externally to said heating chamber (4).

10. Dispensing assembly (3) comprising a main body (1) and a heating cartridge according to any one of the preceding claims.

11. Dispensing assembly according to claim 10, comprising a mixing cartridge (13) in fluid communication with said first conduit (5) and with said second conduit (8) through the respective second openings (7; 10).

## Patentansprüche

1. Heizpatrone (1) für eine Abgabeanordnung, wobei die Heizpatrone umfasst:
eine Heizkammer (4), und
ein Heizelement (11), das sich im Inneren der Heizkammer (4) erstreckt und mit Anschlusselementen (12) für den Anschluss an eine elektrische Stromquelle ausgestattet ist;
**dadurch gekennzeichnet, dass** die Heizpatrone umfasst:
eine erste Leitung (5) mit einer ersten Öffnung (6) für einen Wasserzufluss und mindestens einer zweiten Öffnung (7) für einen Wasserabfluss, wobei die erste Leitung (5) in Fluidverbindung mit der Heizkammer (4) steht; und
eine zweite Leitung (8), die sich im Inneren der Heizkammer (4) erstreckt und eine erste Öffnung (9) für einen Wasserzufluss und eine zweite Öffnung (10) für einen Wasserabfluss aufweist, wobei die zweite Leitung (8) durch die erste Öffnung (9) in Fluidverbindung mit der Heizkammer (4) steht.

2. Patrone nach Anspruch 1, wobei die erste Leitung (5) sich im Inneren der Heizkammer (4) erstreckt.

3. Patrone nach Anspruch 1 oder 2, wobei die Fluidverbindung zwischen der ersten Leitung (5) und der Heizkammer (4) in der Nähe der zweiten Öffnung (7) der ersten Leitung (5) stattfindet.

4. Patrone nach Anspruch 1, 2 oder 3, wobei das Heizelement (11) in der Heizkammer (4) entfernbar aufgenommen ist, vorzugsweise wobei das Heizelement (11) aus der Heizkammer (4) von der Außenseite derselben herausnehmbar ist.

5. Patrone nach einem der vorangehenden Ansprüche, wobei das Heizelement (11) ein keramisches Silikon-Außengehäuse aufweist.

6. Patrone nach einem der vorhergehenden Ansprüche, wobei die erste Leitung (5) im Bereich der zweiten Öffnung (7) einen spitzen Endabschnitt (14), vorzugsweise einen Endabschnitt (14) mit schrägem Profil oder halbkreisförmigem Querschnitt, aufweist.

7. Patrone nach Anspruch 6, wobei die Heizkammer (4) im Bereich des Endabschnitts (14) der ersten Leitung (5) mit einer Aufnahme (15) versehen ist, deren Breite im Wesentlichen dem Durchmesser der ersten Leitung (5) entspricht.

8. Patrone nach einem der vorhergehenden Ansprüche, umfassend ein Potentiometer, das auf das Heizelement (11) wirkt.

9. Patrone nach einem der vorhergehenden Patentansprüche, umfassend eine im Inneren der Heizkammer (4) angeordnete Temperaturmessvorrichtung und eine außerhalb der Heizkammer (4) angeordnete Anzeige, welche die von der Temperaturmessvorrichtung gemessene Temperatur anzeigt.

10. Abgabeanordnung (3) umfassend einen Hauptkörper (1) und eine Heizpatrone nach einem der vorhergehenden Ansprüche.

11. Abgabeanordnung nach Anspruch 10, umfassend eine Mischkartusche (13), die mit der ersten Leitung (5) und der zweiten Leitung (8) durch die entsprechenden zweiten Öffnungen (7; 10) in Fluidverbindung steht.

## Revendications

1. Cartouche chauffante (1) pour ensemble de distribution, la cartouche chauffante comprenant:
une chambre chauffante (4), et
un élément chauffant (11) s'étendant à l'intérieur de ladite chambre chauffante (4) et pourvu d'éléments de connexion (12) pour la connexion à une source d'alimentation électrique;
**caractérisée en ce que** la cartouche chauffante comprend:
un premier conduit (5) présentant une première ouverture (6) pour un flux d'entrée d'eau et au moins une seconde ouverture (7) pour un flux de sortie d'eau, dans laquelle le premier conduit (5) est en communication fluidique avec ladite chambre chauffante (4); et
un second conduit (8) s'étendant à l'intérieur de ladite chambre chauffante (4) et présentant une première ouverture (9) pour un flux d'entrée d'eau et une seconde ouverture (10) pour un flux de sortie d'eau, dans laquelle ledit second conduit (8) est en communication fluidique avec ladite chambre chauffante (4) à travers ladite première ouverture (9).

2. Cartouche selon la revendication 1, dans laquelle ledit premier conduit (5) s'étend à l'intérieur de ladite chambre chauffante (4).

3. Cartouche selon la revendication 1 ou 2, dans laquelle ladite communication fluidique entre ledit premier conduit (5) et ladite chambre chauffante (4) a lieu à proximité de ladite seconde ouverture (7) dudit premier conduit (5).

4. Cartouche selon la revendication 1, 2 ou 3, dans laquelle ledit élément chauffant (11) est logé de manière amovible dans ladite chambre chauffante (4), de préférence dans laquelle ledit élément chauffant (11) peut être extrait de ladite chambre chauffante (4) depuis l'extérieur de la même.

5. Cartouche selon l'une quelconque des revendications précédentes, dans laquelle ledit élément chauffant (11) comprend un boîtier extérieur en silicone céramique.

6. Cartouche selon l'une quelconque des revendications précédentes, dans laquelle ledit premier conduit (5), en correspondance de ladite seconde ouverture (7), présente une portion d'extrémité (14) pointue, de préférence une portion d'extrémité (14) ayant un profil oblique ou une section semi-circulaire.

7. Cartouche selon la revendication 6, dans laquelle ladite chambre chauffante (4), en correspondance de ladite portion d'extrémité (14) dudit premier conduit (5), est pourvue d'un logement (15) présentant une largeur correspondant essentiellement au diamètre dudit premier conduit (5).

8. Cartouche selon l'une quelconque des revendications précédentes, comprenant un potentiomètre agissant sur ledit élément chauffant (11).

9. Cartouche selon l'une quelconque des revendications précédentes, comprenant un dispositif de mesure de la température logé à l'intérieur de ladite chambre chauffante (4) et un affichage indiquant la température mesurée par ledit dispositif de mesure de la température disposé à l'extérieur de ladite chambre chauffante (4).

10. Ensemble de distribution (3) comprenant un corps principal (1) et une cartouche chauffante selon l'une quelconque des revendications précédentes.

11. Ensemble de distribution selon la revendication 10, comprenant une cartouche de mélange (13) en communication fluidique avec ledit premier conduit (5) et ledit second conduit (8) à travers les secondes ouvertures (7; 10) respectives.
